# EUROPEAN PATENT SPECIFICATION

(11) **EP 2 420 655 B1**
(45) Date of publication and mention of the grant of the patent: **04.11.2015**
(21) Application number: 09843044.0
(22) Date of filing: 06.04.2009
(51) Int. Cl.: F01N 3/20, F01N 3/08

(54) **EXHAUST PURIFICATION DEVICE FOR INTERNAL COMBUSTION ENGINE**
ABGASREINIGUNGSVORRICHTUNG FÜR VERBRENNUNGSMOTOR
DISPOSITIF DE PURIFICATION D'ÉCHAPPEMENT POUR MOTEUR À COMBUSTION INTERNE

(43) Date of publication of application: 22.02.2012
(73) Proprietor: TOYOTA JIDOSHA KABUSHIKI KAISHA, Toyota-shi, Aichi-ken, 471-8571 (JP)
(72) Inventor: YOSHIDA, Kohei, Toyota-shi, Aichi-ken, 471-8571 (JP); SOBUE, Yuichi, Toyota-shi, Aichi-ken, 471-8571 (JP); OTSUKI, Hiroshi, Toyota-shi, Aichi-ken, 471-8571 (JP); IIDA, Masahide, Toyota-shi, Aichi-ken, 471-8571 (JP); KURISAKA, Itsuya, Toyota-shi, Aichi-ken, 471-8571 (JP); SUGAWARA, Kou, Toyota-shi, Aichi-ken, 471-8571 (JP)
(74) Representative: Kuhnen & Wacker
(86) International application number: PCT/JP2009/057405
(87) International publication number: WO 2010/116535

(56) References cited:
- EP-A1- 2 196 647
- EP-A2- 1 519 015
- JP-A- 2005 098 177
- JP-A- 2005 291 130
- JP-A- 2008 267 213
- JP-A- 2009 068 481

## Description

### Technical Field

The present invention relates to an exhaust purification system of an internal combustion engine

### Background Art

Known in the art is an internal combustion engine configured by arranging in an engine exhaust passage an NOx storage reduction catalyst storing NOx contained in exhaust gas when an air-fuel ratio of the inflowing exhaust gas is lean and reducing and purifying the stored NOx when the air-fuel ratio of the inflowing exhaust gas becomes the stoichiometric air-fuel ratio or rich. In this internal combustion engine, the NOx which is produced when combustion is performed under a lean air-fuel ratio is stored in the NOx storage reduction catalyst. On the other hand, if the NOx storage ability of the NOx storage reduction catalyst approaches saturation, the air-fuel ratio of the exhaust gas is temporarily made rich whereby the NOx is reduced and purified from the NOx storage reduction catalyst.

In this regard, fuel and lubrication oil contain sulfur. Therefore, the exhaust gas contains sulfur compounds (SOx, for example SO₂). This SOx is stored together with NOx in the NOx storage reduction catalyst. In this regard, this SOx is not released from the NOx storage reduction catalyst by just making the air-fuel ratio of the exhaust gas rich. Therefore, the amount of SOx which is stored in the NOx storage reduction catalyst gradually increases (hereinafter, referred to as "sulfur poisoning"). As a result, the amount of NOx which can be stored in the NOx storage reduction catalyst ends up being gradually decreased.

To make the NOx storage reduction catalyst release the SOx (that is, perform sulfur poisoning recovery), it is necessary to raise the catalyst temperature of the NOx storage reduction catalyst to the temperature at which SOx is released, that is, the SOx release temperature (for example, 600°C) and to make the air-fuel ratio of the exhaust gas which flows into the NOx storage reduction catalyst the stoichiometric air-fuel ratio or rich air-fuel ratio, for sulfur poisoning recovery control.

Therefore, known in the art is an exhaust purification system of an internal combustion engine which raises the catalyst temperature of the NOx storage reduction catalyst to the SOx release temperature and makes the air-fuel ratio of the exhaust gas which flows into the NOx storage reduction catalyst the stoichiometric air-fuel ratio (see PLT 1).

In this regard, even if performing sulfur poisoning recovery processing as explained above, sometimes sulfur poisoning recovery is not suitably performed, that is, the stored SOx is not sufficiently released from the NOx storage reduction catalyst.

As the causes of this, it is believed that since the NOx storage reduction catalyst has a predetermined length in the exhaust passage, before the once released SOx is discharged into the exhaust passage downstream of the NOx storage reduction catalyst, it is re-stored in the part of the NOx storage reduction catalyst downstream of the released part (hereinafter, referred to as "re-storage"). Further, it is believed that when feedback control in the temperature elevation control is not normally performed, sufficient supply of energy for breaking down the sulfur ingredients in the SOx stored in the NOx storage reduction catalyst, that is, sufficient temperature elevation of the NOx storage reduction catalyst, is not performed. There is also the problem that when the temperature elevation of the NOx storage reduction catalyst is not sufficient, the added reducing agent passes straight through the NOx storage reduction catalyst and is discharged outside of the vehicle resulting in a deterioration of the exhaust properties.

Therefore, if performing the sulfur poisoning recovery processing without considering these causes, not only is sulfur poisoning recovery not suitably performed, but also the effect of the temperature elevation processing becomes small thereby leading to wasteful consumption of energy and deterioration of the exhaust properties.

### Citation List

### Patent Literature

PLT 1: Japanese Patent Publication (A) No. JP 2000-161045 A

### Summary of Invention

### Technical Problem

Therefore, an object of the present invention is to provide an exhaust purification system of an internal combustion engine which performs sulfur poisoning recovery processing with a good energy efficiency.

### Solution to Problem

In a first aspect of the present invention, there is provided an exhaust purification system of an internal combustion engine which arranges in an engine exhaust passage an NOx storage reduction catalyst which stores NOx which is contained in exhaust gas when an air-fuel ratio of inflowing exhaust gas is lean and which reduces and purifies the stored NOx when the air-fuel ratio of the inflowing exhaust gas becomes the stoichiometric air-fuel ratio or rich and which is provided with sulfur poisoning recovery control means for performing sulfur poisoning recovery control which makes a catalyst temperature of the NOx storage reduction catalyst rise to an SOx release temperature and makes the air-fuel ratio of the exhaust gas rich when the NOx storage reduction catalyst should be made to release the stored SOx, the exhaust purification system of an internal combustion engine characterized by being further provided with SOx release speed calculating means for calculating a speed of release of SOx which is stored in the NOx storage reduction catalyst, said sulfur poisoning recovery control means being provided with a rich time extension control which is executed for judging whether to further continue and extend the rich processing or to stop it, by stopping sulfur poisoning recovery control when the sulfur poisoning recovery control means should execute sulfur poisoning recovery control and the SOx release speed which is calculated by the SOx release speed calculating means is smaller than a lower limit release speed, and by being further provided with re-storage rate calculating means for calculating a ratio of an amount of SOx which is re-stored in the NOx storage reduction catalyst in an amount of SOx which is released from the NOx storage reduction catalyst, defined as a re-storage rate, and in that the sulfur poisoning recovery control means repeatedly executes rich processing which makes the air-fuel ratio of the inflowing exhaust gas rich interspaced by exactly a lean time and uses the re-storage rate which is calculated by the re-storage rate calculating means during each said rich processing as the basis to set a stop timing of said rich processing.

In a second aspect of the present invention, there is provided an exhaust purification system of an internal combustion engine characterized in that the SOx release speed calculating means uses at least one of the catalyst temperature of the NOx storage reduction catalyst, an SOx amount stored in the NOx storage reduction catalyst, and a reducing agent amount supplied as the basis to calculate the SOx release speed.

In a third aspect of the present invention, there is provided an exhaust purification system of an internal combustion engine characterized in that the sulfur poisoning recovery control means continues the rich processing when the re-storage rate which is calculated by the re-storage rate calculating means is larger than a predetermined re-storage rate and stops rich processing when the re-storage rate is smaller than the predetermined re-storage rate.

In a fourth aspect of the present invention, there is provided an exhaust purification system of an internal combustion engine characterized in that the re-storage rate calculating means uses the catalyst temperature of the NOx storage reduction catalyst as the basis to calculate the re-storage rate.

In a fifth aspect of the present invention, there is provided an exhaust purification system of an internal combustion engine characterized by arranging in the exhaust passage upstream of the NOx storage reduction catalyst an oxygen storage catalyst which stores oxygen which is contained in the exhaust gas when the air-fuel ratio of the inflowing exhaust gas is lean and which releases the stored oxygen when the air-fuel ratio of the inflowing exhaust gas becomes rich and by being further provided with SOx amount distribution calculating means for calculating distribution of an amount of SOx which is stored in the NOx storage reduction catalyst and in that the re-storage rate calculating means uses an exhaust gas amount, an execution time of the rich processing from when oxygen which was stored in the oxygen storage catalyst becomes zero, and an SOx amount distribution which is calculated by the SOx amount distribution calculating means as the basis to calculate the re-storage rate during each rich processing.

### Advantageous Effects of Invention

According to these aspects of the present invention, even when sulfur poisoning recovery control should be performed, if the efficiency of sulfur poisoning recovery processing is poor and the NOx storage reduction catalyst is liable to degrade due to heat and the fuel efficiency is liable to deteriorate even if performing sulfur poisoning recovery control, the sulfur poisoning recovery control can be stopped and therefore sulfur poisoning recovery processing can be performed with a good energy efficiency.

Below, the present invention will be able to be understood more fully from the attached drawings and the description of preferred embodiments of the present invention.

### Brief Description of Drawings

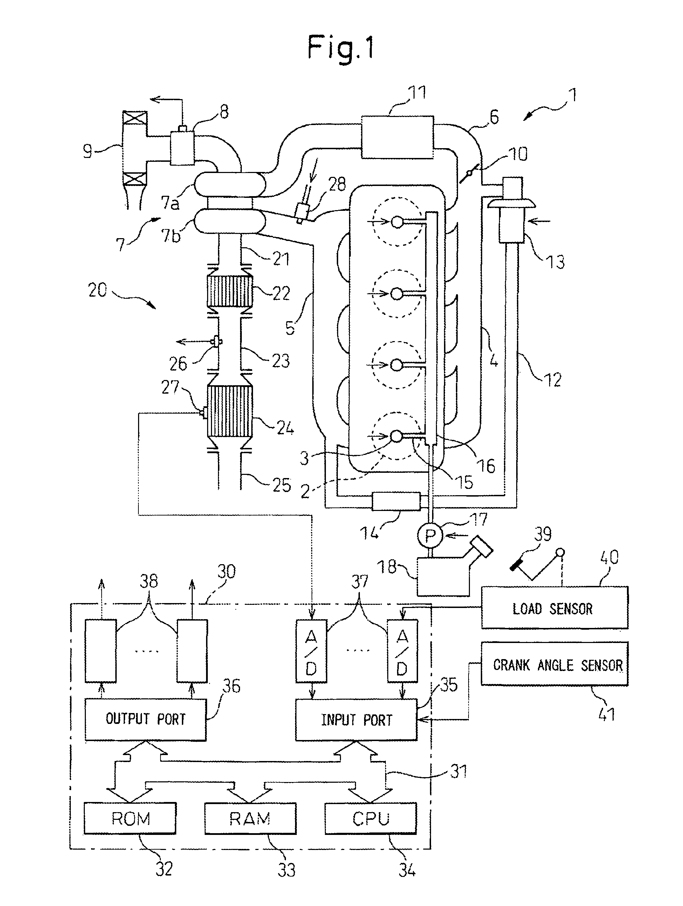

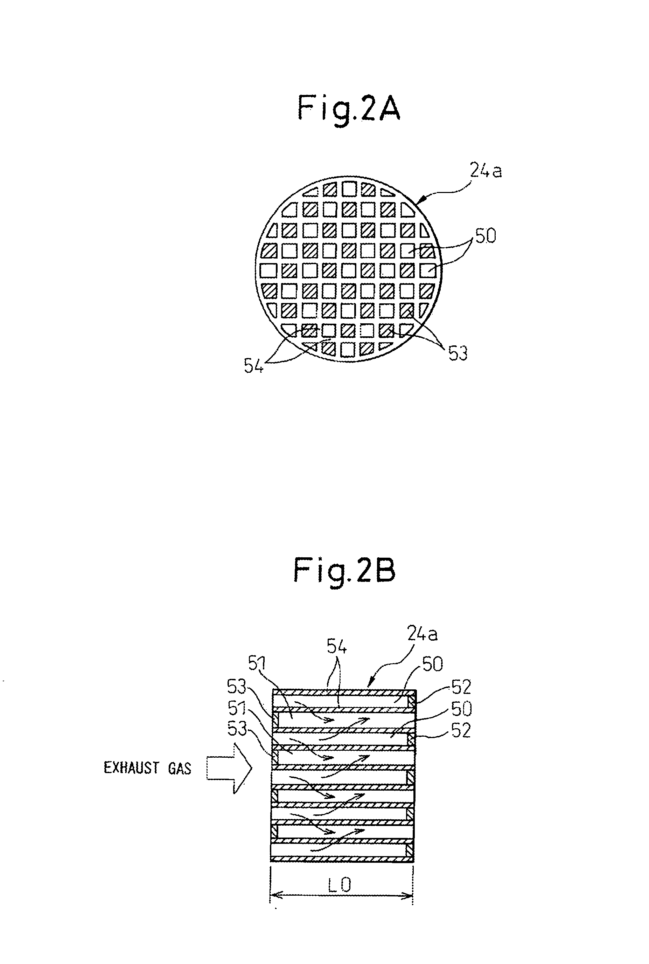

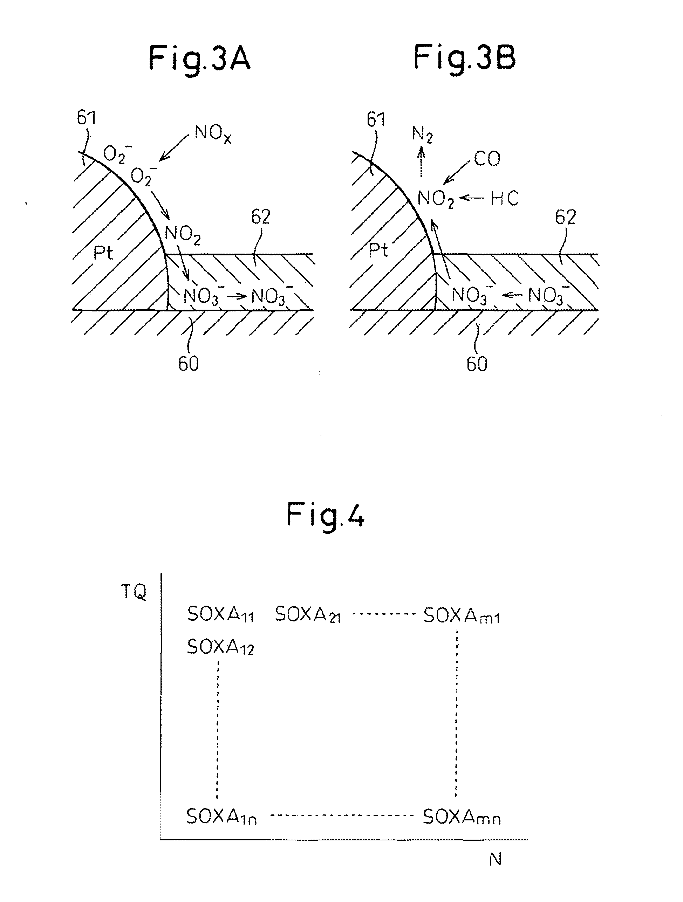

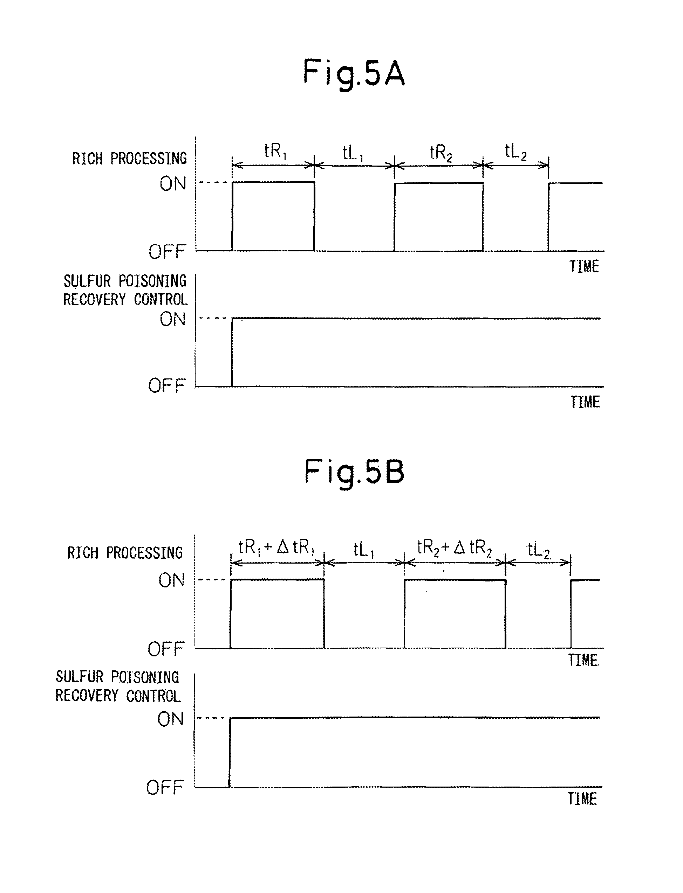

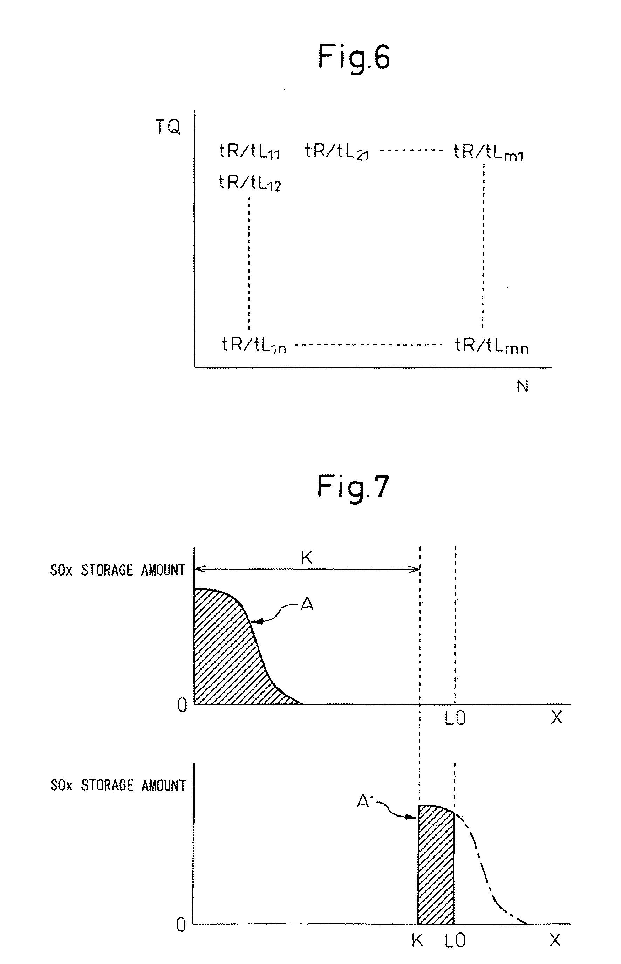

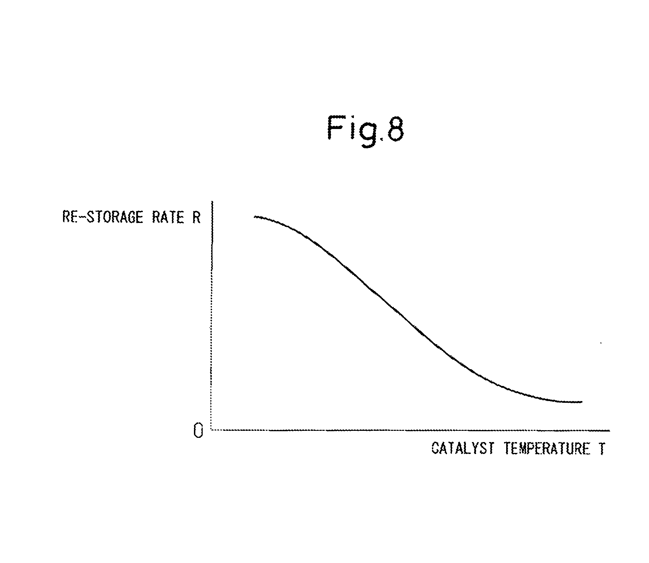

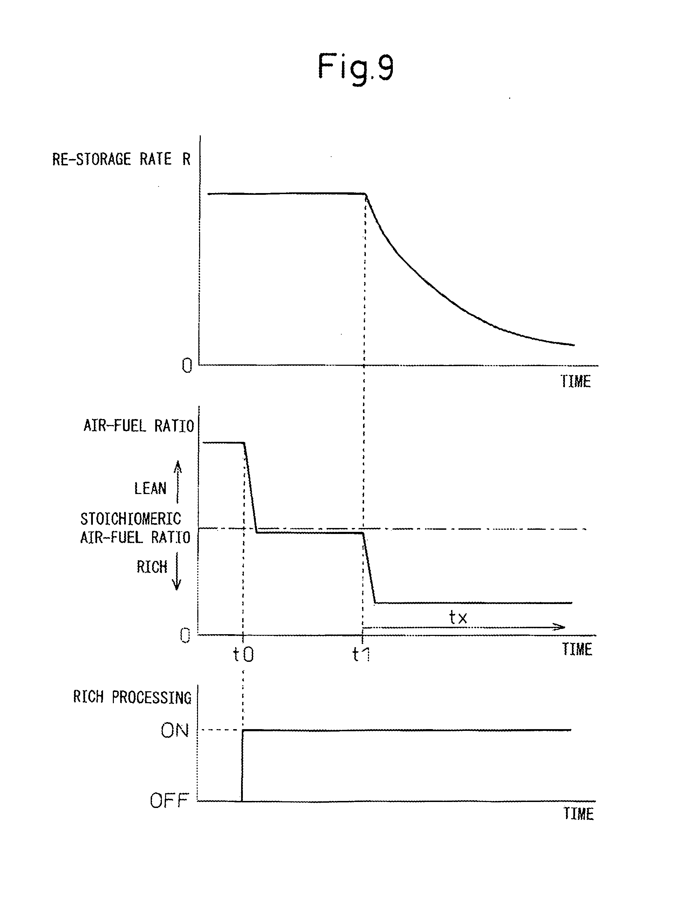

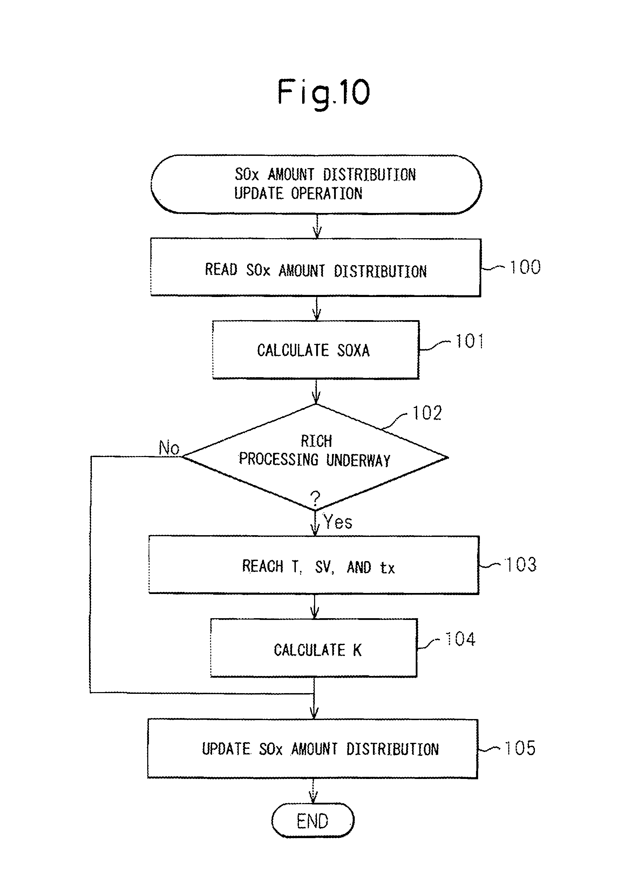

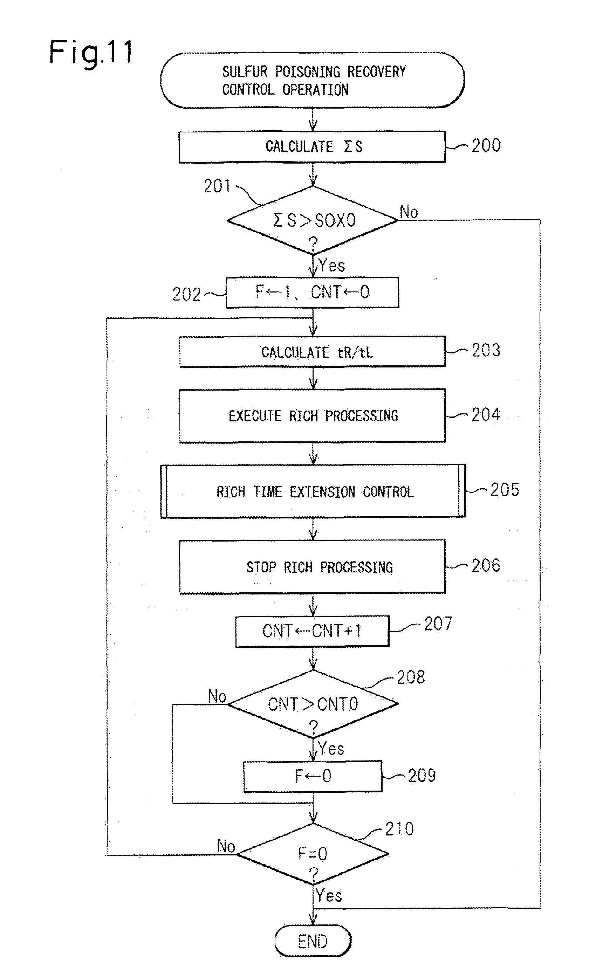

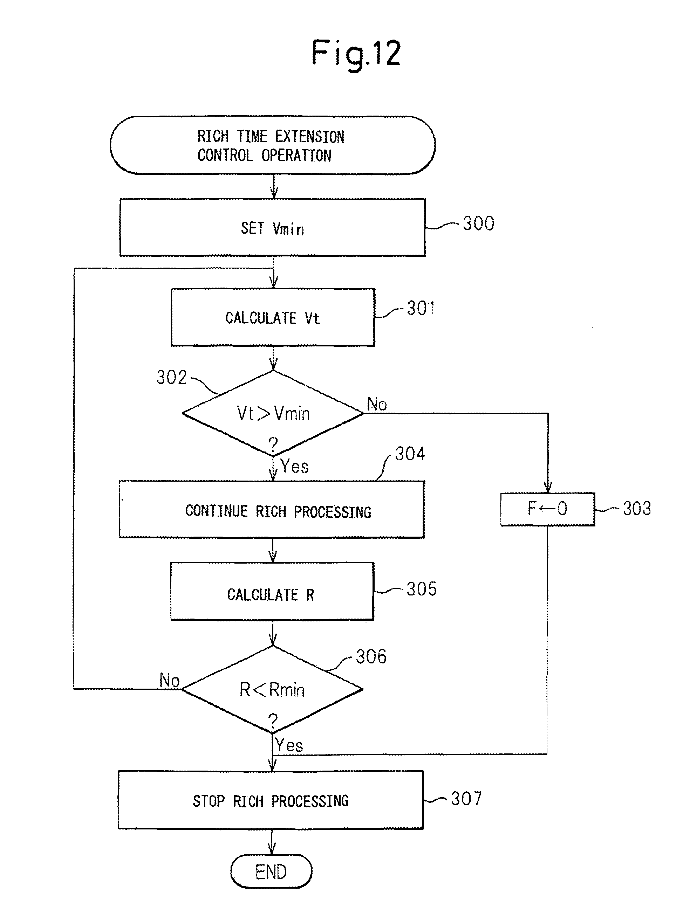

FIG. 1 is an overview of a compression ignition type internal combustion engine, FIG. 2A and FIG. 2B are views showing the structure of the NOx storage reduction catalyst, FIG. 3A and FIG. 3B are cross-sectional views of the surface part of the catalyst carrier of the NOx storage reduction catalyst, FIG. 4 is a view showing a map of the SOx amount SOXA stored per unit time, FIG. 5A and FIG. 5B are views showing the timing of execution of rich processing during execution of sulfur poisoning recovery control, FIG. 6 is a view showing a map of the execution time tR and stop time tL of rich processing, FIG. 7 is a view showing the SOx amount distribution of the SOx stored in the NOx storage reduction catalyst, FIG. 8 is a view showing the relationship between the catalyst temperature T and re-storage rate R of an NOx storage reduction catalyst 24, FIG. 9 is a view showing the relationship between the re-storage rate R during rich processing and the air-fuel ratio of the exhaust gas which flows into the NOx storage reduction catalyst, FIG. 10 is a flowchart of an SOx amount distribution update operation, FIG. 11 is a flowchart of a sulfur poisoning recovery control operation, and FIG. 12 is a flowchart of a rich time extension control operation.

### Description of Embodiments

FIG. 1 shows the case of application of the present invention to a compression ignition type internal combustion engine. However, the present invention can also be applied to a spark ignition type internal combustion engine.

Referring to FIG. 1, 1 shows an engine body, 2 a combustion chamber of each cylinder, 3 an electronic control type fuel injector for injecting fuel into each combustion chamber 2, 4 an intake manifold, and 5 an exhaust manifold. The intake manifold 4 is connected through an intake duct 6 to an outlet of a compressor 7a of an exhaust turbocharger 7, while an inlet of the compressor 7a is connected through an air flow meter 8 to an air cleaner 9. Note that, the intake air amount which is detected by the air flow meter 8 is equal to the exhaust gas amount SV. Inside the intake duct 6 is arranged a throttle valve 10 driven by a step motor. Further, around the intake duct 6 is arranged a cooling device 11 for cooling the intake air flowing inside the intake duct 6. In the embodiment shown in FIG. 1, the engine cooling water is guided into the cooling device 11 where the engine cooling water is used to cool the intake air. On the other hand, the exhaust manifold 5 is connected to an inlet of an exhaust turbine 7b of the exhaust turbocharger 7, while an outlet of the exhaust turbine 7b is connected through an exhaust post treatment device 20.

The exhaust manifold 5 and the intake manifold 4 are connected to each other through an exhaust gas recirculation (hereinafter referred to as the "EGR") passage 12. Inside the EGR passage 12 is arranged an electronic control type EGR control valve 13. Further, around the EGR passage 12 is arranged a cooling device 14 for cooling the EGR gas flowing through the inside of the EGR passage 12. In the embodiment shown in FIG. 1, the engine cooling water is guided inside the cooling device 14 where the engine cooling water is used to cool the EGR gas. On the other hand, each fuel injector 3 is connected through a fuel feed pipe 15 to a common rail 16. The inside of this common rail 16 is fed with fuel from an electronic control type variable discharge fuel pump 17. The fuel fed to the common rail 16 is fed through each fuel feed pipe 15 to a fuel injector 3.

The exhaust post treatment device 20 has an exhaust pipe 21 which is connected to an outlet of the exhaust turbine 7b, an oxygen storage catalyst 22 which is connected to the exhaust pipe 21, an exhaust pipe 23 which is connected to the oxygen storage catalyst 22, an NOx storage reduction catalyst 24 which is connected to the exhaust pipe 23, and an exhaust pipe 25 which is connected to the NOx storage reduction catalyst 24. Further, in the exhaust pipe 23, an air-fuel ratio sensor 26 is arranged for detecting an air-fuel ratio of the exhaust gas which is discharged from the oxygen storage catalyst 22 and flows into the NOx storage reduction catalyst 24, while in the NOx storage reduction catalyst 24, a temperature sensor 27 is mounted for detecting a catalyst temperature T.

On the other hand, as shown in FIG. 1, in the exhaust manifold 5, a fuel addition valve 28 is mounted. This fuel addition valve 28 has fuel added to it from the common rail 16 as a reducing agent. Fuel is added from the fuel addition valve 28 to the inside of the exhaust manifold 55. In this embodiment of the present invention, this fuel is comprised of diesel oil. Note that, the fuel addition valve 28 may also be mounted in the exhaust pipe 21. Further, as the reducing agent, instead of adding fuel from the fuel addition valve 28, it is also possible to generate exhaust gas including CO (carbon monoxide) and generate exhaust gas with a rich air-fuel ratio. CO is higher in reducibility than fuel and can be produced by making the air-fuel ratio of the air-fuel mixture in a combustion chamber rich and burning the mixture at a high temperature.

An electronic control unit 30 is comprised of a digital computer which is provided with components connected with each other by a bi-directional bus 31 such as a ROM (read only memory) 32, RAM (random access memory) 33, CPU (microprocessor) 34, input port 35, and output port 36. Output signals of the air flow meter 8, air-fuel ratio sensor 26, and temperature sensor 27 are input through respectively corresponding AD converters 37 to the input port 35. Further, an accelerator pedal 39 is connected to a load sensor 40 generating an output voltage proportional to the depression amount L of the accelerator pedal 39. The output voltage of the load sensor 40 is input through the corresponding AD converter 37 to the input port 35. Further, the input port 35 has a crank angle sensor 41 generating an output pulse every time the crankshaft rotates by for example 15° connected to it. On the other hand, the output port 36 has the fuel injectors 3, throttle valve 10 drive step motor, EGR control valve 13, fuel pump 17, and fuel adding valve 28 connected to it through corresponding drive circuits 38.

The oxygen storage catalyst 22 has the function of storing oxygen which is contained in the exhaust gas when the air-fuel ratio of the inflowing exhaust gas is lean and releasing the stored oxygen when the air-fuel ratio of the inflowing exhaust gas becomes rich. In the present embodiment, as the oxygen storage catalyst 22, a three-way catalyst is used. However, the NOx storage reduction catalyst 24 may also have that function.

The NOx storage reduction catalyst 24 is for example carried on a particulate filter 24a. FIG. 2A and FIG. 2B show the structure of the particulate filter 24a. Note that, FIG. 2A shows a front view of the particulate filter 24a, while FIG. 2B shows a side cross-sectional view of the particulate filter 24a. As shown in FIG. 2A and FIG. 2B, the particulate filter 24a forms a honeycomb structure which is provided with a plurality of exhaust flow passages 50, 51 which extend in parallel with each other. These exhaust flow passages are comprised of exhaust gas inflow passages 50 with bottom ends which are closed by plugs 52 and exhaust gas outflow passage 51 with upstream ends which are closed by plugs 53. Note that, the parts shown by hatching in FIG. 2A show the plugs 53. Therefore, the exhaust gas inflow passages 50 and exhaust gas outflow passages 51 are alternately arranged via thin partition walls 54. In other words, the exhaust gas inflow passages 50 and exhaust gas outflow passages 51 are arranged so that each exhaust gas inflow passage 50 is surrounded by four exhaust gas outflow passages 51 and each exhaust gas outflow passage 51 is surrounded by four exhaust gas inflow passages 50.

The particulate filter 24a is for example formed from a porous material such as cordierite. Therefore, the exhaust gas flowing into the exhaust gas inflow passages 50, as shown by the arrows in FIG. 2B, passes through the surrounding partition walls 54 and flows out into the adjoining exhaust gas outflow passages 51.

In this embodiment according to the present invention, the peripheral walls of the exhaust gas inflow passages 50 and exhaust gas outflow passages 51, that is, the two side surfaces of the partition walls 54 and the inside walls of the fine holes in the partition walls 54, carry, for example, a catalyst carrier comprised of alumina. FIG. 3A and FIG. 3B schematically illustrate the cross-section of the surface part of this catalyst carrier 60. As shown in FIG. 3A and FIG. 3B, the surface of the catalyst carrier 60 carries a precious metal catalyst 61 comprised of for example platinum Pt diffused in it. Furthermore, the surface of the catalyst carrier 60 is formed with a layer of a NOx absorbent 62.

In the embodiment according to the present invention, as the precious metal catalyst 61, platinum Pt is used. As the ingredient forming the NOx absorbent 62, for example, at least one ingredient selected from potassium K, sodium Na, cesium Cs, or another such alkali metal, barium Ba, calcium Ca, or another such alkali earth, and lanthanum La, yttrium Y, or another such rare earth is used.

If the ratio of the air and fuel (hydrocarbons) fed inside the engine intake passage, combustion chambers 2, and exhaust passage upstream of the NOx storage reduction catalyst 24 is referred to as the "air-fuel ratio of the exhaust gas", the NOx absorbent 62 absorbs the NOx when the air-fuel ratio of the exhaust gas is lean and releases the absorbed NOx when the oxygen concentration in the exhaust gas falls in an "NOx absorption/release action".

That is, explaining the case of using barium Ba as the ingredient forming the NOx absorbent 62 as an example, when the air-fuel ratio of the exhaust gas is lean, that is, when the oxygen concentration in the exhaust gas is high, the NO contained in the exhaust gas, as shown in FIG. 3A, is oxidized on the platinum Pt 61 and becomes NO₂, next this is absorbed in the NOx absorbent 62 and, while bonding with the barium oxide BaO, diffuses in the form of nitric acid ions NO₃⁻ inside the NOx absorbent 62. In this way, the NOx is stored in the NOx absorbent 62. So long as the oxygen concentration in the exhaust gas is high, NO₂ is produced on the surface of the platinum Pt 61. So long as the NOx absorption ability of the NOx absorbent 62 is not saturated, the NO₂ is absorbed in the NOx absorbent 62 and nitric acid ions NO₃⁻ are produced.

As opposed to this, if the air-fuel ratio of the exhaust gas is made rich or the stoichiometric air-fuel ratio, the oxygen concentration in the exhaust gas falls, so the reaction proceeds in the opposite direction (NO₃⁻ →NO₂) and therefore, as shown in FIG. 3B, the nitric acid ions NO₃⁻ in the NOx absorbent 62 are released in the form of NO₂ from the NOx absorbent 62. Next, the released NOx is reduced by the unburned HC and CO contained in the exhaust gas.

In this way, when the air-fuel ratio of the exhaust gas is lean, that is, when combustion is performed under a lean air-fuel ratio, the NOx in the exhaust gas is absorbed in the NOx absorbent 62. However, when combustion continues under a lean air-fuel ratio, during that time, the NOx absorption ability of the NOx absorbent 62 ends up becoming saturated and therefore the NOx absorbent 62 ends up no longer being able to absorb the NOx. Therefore, in the embodiment according to the present invention, before the absorption ability of the NOx absorbent 62 becomes saturated, fuel is fed from the fuel addition valve 28 so as to temporarily make the air-fuel ratio of the exhaust gas rich and thereby make the NOx be released from the NOx absorbent 62.

However, exhaust gas contains SOx (for example, SO₂). If this SO₂ flows into the NOx storage reduction catalyst 24, this SO₂ is oxidized at the platinum Pt 61 and becomes SO₃. Next, this SO₃ is absorbed in the NOx absorbent 62 and, while bonding with the barium carbonate BaCO₃, diffuses in the NOx absorbent 62 in the form of sulfuric acid ions SO₄²⁻ to produce stable sulfate BaSO₄. However, the NOx absorbent 62 has a strong basicity, so this sulfate BaSO₄ is stable and hard to break down. With just making the air-fuel ratio of the exhaust gas rich, the sulfate BaSO₄ will not break down and will remain as it is. Therefore, in the NOx absorbent 62, as time elapses, the sulfate BaSO₄ increases (that is, sulfur poisoning occurs). Therefore, along with the elapse of time, the NOx amount which can be absorbed by the NOx absorbent 62 falls.

Therefore, in this case, when the stored SOx should be released, that is, when sulfur poisoning recovery control should be performed, the catalyst temperature T of the NOx storage reduction catalyst 24 is raised to the 600°C or higher SOx release temperature and, in that state, fuel is added from the fuel addition valve 28 to make the air-fuel ratio of the exhaust gas which flows into the NOx storage reduction catalyst 24 rich (hereinafter referred to as "rich processing") whereby SOx is released from the NOx absorbent 62 and the amount of NOx which the NOx absorbent 62 can absorb is restored.

Here, the time when the sulfur poisoning recovery control should be performed means the time when the estimated SOx amount ΣS which is stored in the NOx storage reduction catalyst 24 exceeds a predetermined value SOX0. Fuel contains sulfur in a certain ratio. Therefore, the amount of SOx which is contained in the exhaust gas, that is, the amount of SOx which is stored in the NOx storage reduction catalyst 24, is proportional to the fuel injection amount. The fuel injection amount is a function of the demanded torque TQ and engine speed N. Therefore, the amount of SOx which is stored in the NOx storage reduction catalyst 24 also becomes a function of the demanded torque TQ and engine speed N. In this embodiment of the present invention, the SOx amount SOXA which is stored per unit time in the NOx storage reduction catalyst 24 is stored as a function of the demanded torque TQ and engine speed N in the form of a map as shown in FIG. 4 in advance in the ROM 32. By cumulatively adding the SOx amount SOXA per unit time, the estimated SOx amount ΣS which is stored in the NOx storage reduction catalyst 24 is calculated.

FIG. 5A is a view showing the timing of execution of rich processing during execution of sulfur poisoning recovery control. Sulfur poisoning recovery control, as explained above, performs rich processing in the state where the catalyst temperature T of the NOx storage reduction catalyst 24 is raised to the SOx release temperature. The rich processing is not constantly performed during execution of sulfur poisoning recovery control. This is because, in the present embodiment, if constantly adding fuel from the fuel addition valve 28 as rich processing during execution of sulfur poisoning recovery control, the heat of reaction due to the oxidation reaction of the added fuel will cause the NOx storage reduction catalyst 24 to end up overly rising in temperature and to degrade.

Therefore, the rich processing is executed for a predetermined period so as to make the air-fuel ratio of the exhaust gas rich and raise the catalyst temperature T of the NOx storage reduction catalyst 24. Lean times are inserted where the rich processing is stopped for a predetermined period so as to prevent excessive rise of the temperature of the NOx storage reduction catalyst 24. Therefore, during sulfur poisoning recovery control, as shown in FIG. 5A, execution and stopping of the rich processing are repeated so as to make the NOx storage reduction catalyst 24 release the stored SOx.

The optimal execution time tR and stop time tL of the rich processing at the time of steady operation are stored as functions of the demanded torque TQ and engine speed N in the form of a map such as shown in FIG. 6 in advance in the ROM 32.

However, as explained above, even if performing sulfur poisoning recovery control, depending on the operating state, sometimes the released SOx ends up being re-stored in the NOx storage reduction catalyst 24 itself and sometimes the catalyst temperature T of the NOx storage reduction catalyst 24 during rich processing does not reach the SOx release temperature. Due to this, from the viewpoint of causing the release of SOx, temperature elevation control is performed with little effect. There are the above problems that energy is wastefully consumed and the exhaust properties deteriorate.

Therefore, in the present invention, the SOx release speed Vt and re-storage rate R are used as the basis for performing sulfur poisoning recovery control with a good energy efficiency. Specifically, even if performing sulfur poisoning recovery control, when the demerits arising from it become greater, this is stopped or, as shown in FIG. 5B, the execution time of the rich processing is extended by exactly Δte to perform the sulfur poisoning recovery more efficiently.

The "SOx release speed Vt" means the reaction speed showing the amount of SOx which is stored in the NOx storage reduction catalyst 24 released from the NOx storage reduction catalyst 24 per unit time during sulfur poisoning recovery control.

The SOx release speed Vt is calculated based on at least one of the catalyst temperature T of the NOx storage reduction catalyst 24, the estimated SOx amount ΣS which is stored in the NOx storage reduction catalyst 24, the amount of reducing agent supplied (that is, in the present embodiment, and the amount of fuel which is added from the fuel addition valve 28) by the Arrhenius equation or other experimentally found function or map.

Further, the "re-storage rate R" means the ratio of the amount of SOx which is re-stored in the NOx storage reduction catalyst 24 in the amount of SOx which is released from the NOx storage reduction catalyst 24.

The idea of "re-storage" will be explained in detail while referring to FIG. 7. FIG. 7 is a view showing the distribution of the amount of SOx which is stored in the NOx storage reduction catalyst 24 in the direction of flow of the exhaust gas, that is, the SOx amount distribution. The abscissa X of FIG. 7 shows the length in the downstream direction in the direction of flow of the exhaust gas from the upstream end of the NOx storage reduction catalyst 24 as the starting point zero. If the length of the NOx storage reduction catalyst 24 in the direction of flow of exhaust gas is designated as "L0" (see FIG. 2B), the downstream end of the NOx storage reduction catalyst 24 becomes the coordinate L0. The ordinate of FIG. 7 shows the amount of storage of SOx, that is, the amount of SOx which is stored in the cross-section at the coordinate X of the NOx storage reduction catalyst 24.

Even if operating the engine for a predetermined time in the state where the NOx storage reduction catalyst 24 stores no SOx at all, the SOx amount distribution becomes the SOx amount distribution on the upper of FIG. 7. The SOx which flows into the NOx storage reduction catalyst 24 is stored from the upstream side, so the upstream side catalyst part has a greater amount of storage. The area A of the hatched region where SOx is stored shows the amount of storage of SOx in the NOx storage reduction catalyst 24 as a whole. If executing rich processing of sulfur poisoning recovery control in this state, the stored SOx is released. At that time, part of the SOx which is released once from the NOx storage reduction catalyst 24 is not discharged into the downstream exhaust passage, but, as shown in the SOx amount distribution at the bottom of FIG. 7, is again stored in the downstream part of the NOx storage reduction catalyst 24 at the time of end of the rich processing. This phenomenon is called "re-storage". Further, the re-storage rate R in this state is calculated using the re-stored SOx amount, that is, the area A' of the hatched region in the SOx amount distribution at the bottom of FIG. 7, as the re-storage rate R=A'/A.

Note that, the "SOx release speed Vt" shows the release speed in the case where assuming that re-storage rate R=0.

Here, in the present invention, assume that the SOx which was released at the same timing from the NOx storage reduction catalyst 24 moves by exactly the same distance. Therefore, as shown in the upper of FIG. 7, the stored SOx amount distribution moves by exactly the distance K while maintaining this trend in distribution. This movement distance K will be referred to below as the "SOx movement distance K".

When the stored SOx is released by the rich processing, moves from the stored position by exactly the SOx movement distance K, and, as a result, exceeds the coordinate L0, the SOx is discharged into the downstream exhaust passage without being re-stored in the NOx storage reduction catalyst 24. As opposed to this, when the stored SOx is released by the rich processing, moves from the stored position by exactly the SOx movement distance K, and, as a result, does not exceed the coordinate L0, it is re-stored. Therefore, the re-storage rate R becomes lower the larger the SOx movement distance K. When the SOx movement distance K becomes larger than the length L0 of the NOx storage reduction catalyst 24, the re-storage rate R becomes "0".

Due to the above, the re-storage rate R is determined based on the SOx movement distance K and the SOx amount distribution.

FIG. 8 is a view showing the relationship between the catalyst temperature T of the NOx storage reduction catalyst 24 and the re-storage rate R. As clear from FIG. 8, it will be understood that the re-storage rate R tends to become lower the higher the catalyst temperature T. This shows that the higher the catalyst temperature T, the larger the SOx movement distance K.

FIG. 9 is a view showing the relationship between the re-storage rate R and the air-fuel ratio of the exhaust gas which flows into the NOx storage reduction catalyst 24 during rich processing. Referring to FIG. 9, if the rich processing is started at the timing t0, fuel is added from the fuel addition valve 28, whereby the air-fuel ratio of the exhaust gas gradually shifts to the rich side. However, there is a period from right after the trend of the air-fuel ratio exceeds the stoichiometric air-fuel ratio where despite the addition of fuel from the fuel addition valve 28, a sufficiently rich air-fuel ratio will not be reached. The reason is that in this period, the oxygen storage catalyst 22 is in a state releasing the stored oxygen due to the air-fuel ratio of the inflowing exhaust gas being made rich. Further, during this period, the re-storage rate R is also high, so the amount of SOx which is actually released from the NOx storage reduction catalyst 24 into the downstream exhaust passage is also extremely small. After this, the oxygen which was stored in the oxygen storage catalyst 22 is completely released and becomes zero. From the timing t1 where the air-fuel ratio shifts to become sufficiently rich, the re-storage rate R starts to decrease. Along with this, the amount of released SOx which is actually discharged into the downstream exhaust passage increases. The execution time of rich processing from the timing t1 where all of the oxygen which had been stored in the oxygen storage catalyst 22 is released and becomes zero will be referred to below as the "effective rich processing time tx"_{.}

Therefore, it is learned that the re-storage rate R tends to become lower along with the effective rich processing time tx. This shows that the longer the effective rich processing time tx, the larger the SOx movement distance K. Note that, the timing t1 where all of the oxygen which had been stored in the oxygen storage catalyst 22 is released and becomes zero (timing t1) can be determined from the change in the air-fuel ratio of the sudden enrichment such as shown in FIG. 9 detected by the air-fuel ratio sensor 26.

Note that, only naturally, the larger the exhaust gas amount SV, the larger the SOx movement distance K becomes.

Due to the above, the SOx movement distance K can be calculated by a function using the catalyst temperature T of the NOx storage reduction catalyst 24, the effective rich processing time tx, and the exhaust gas amount SV.

Therefore, the re-storage rate R can be calculated from the area ratio of the SOx amount distribution at the current point of time and the SOx amount distribution predicted after movement by exactly the SOx movement distance K calculated as explained above. However, it may also be calculated from the relationship of the catalyst temperature T of the NOx storage reduction catalyst 24 and the re-storage rate R such as shown in FIG. 8. As another method of finding the re-storage rate R, it is also possible to arrange SOx sensors which detect the SOx amount in the upstream exhaust passage and downstream exhaust passage of the NOx storage reduction catalyst 24 and measure the inflow and discharge of SOx and perform calculations by a function or map found by experiment or calculations.

In this regard, if considering repeatedly executing and stopping the rich processing such as shown in FIG. 5A, even if the oxygen which was stored in the oxygen storage catalyst 22 is all released and becomes zero, during the lean times in which the rich processing is stopped and the air-fuel ratio becomes lean, the oxygen is again stored in the oxygen storage catalyst 22. This being the case, at the time of the next rich processing after a lean time interval, the re-storage rate again increases, the stored oxygen is released and becomes zero, then the re-storage rate R decreases and the release amount of SOx increases, creating a cycle. Therefore, the longer the execution time of each rich processing, that is, the effective rich processing, the more efficiently the sulfur poisoning recovery can be performed. The present invention performs the following such sulfur poisoning recovery control for this.

Note that, the time from the timing t0 when starting the rich processing to the timing t1 when the oxygen which had been stored in the oxygen storage catalyst 22 is all released and becomes zero is substantially the same time in all the rich processing.

FIG. 10 is a flowchart of the SOx amount distribution update operation according to an embodiment of the present invention. This operation is performed as a routine which is executed by the electronic control unit (ECU) 30 by interreuption every predetermined set time.

First, at step 100, a current SOx amount distribution is read, then the routine proceeds to step 101. Next, at step 101, based on the map such as shown in FIG. 4, the SOx amount SOXA per unit time is calculated, then the routine proceeds to step 102. Next, at step 102, it is judged if, currently, rich processing is underway. When currently rich processing is not underway, the routine proceeds to step 105. Next, at step 105, the SOx amount distribution which is read at step 100 and the SOx amount SOXA per unit time which is calculated at step 101 are used as the basis to update the SOx amount distribution and the routine is ended. That is, when rich processing is not underway, the stored SOx is not released, so only the newly stored amount of SOx is considered to update the SOx amount distribution.

On the other hand, if, at step 102, currently, rich processing is underway, the routine proceeds to step 103. Next, at step 103, the catalyst temperature T of the NOx storage reduction catalyst 24, the effective rich processing time tx, and the exhaust gas amount SV are read, then the routine proceeds to step 104. Next, at step 104, the catalyst temperature T of the NOx storage reduction catalyst 24, the effective rich processing time tx, and the exhaust gas amount SV which are read at step 103 are used as the basis to calculate the SOx movement distance K, then the routine proceeds to step 105. Next, at step 105, the SOx amount distribution which is read at at step 100, the SOx amount SOXA per unit time which is calculated at step 101, and the SOx movement distance K which is calculated at step 104 are used as the basis to update the SOx amount distribution and end the routine. That is, when rich processing is underway, not only the newly stored amount of SOx, but also the amount of movement due to release of the stored SOx is considered to update the SOx amount distribution.

FIG. 11 is a flowchart of a sulfur poisoning recovery control operation for performing sulfur poisoning recovery control according to an embodiment of the present invention which is performed based on the above-mentioned SOx release speed Vt and re-storage rate R. This operation is performed as a routine which is executed by the electronic control unit (ECU) 30 by interruption every predetermined set time.

First, at step 200, based on a map such as shown in FIG. 4, the SOx amount SOXA per unit time is cumulatively added to thereby calculate the estimated SOx amount ΣS which is stored in the NOx storage reduction catalyst 24, then the routine proceeds to step 201. Next, at step 201, it is judged if the estimated SOx amount ΣS which is stored in the NOx storage reduction catalyst 24 has exceeded a predetermined value SOX0, that is, if sulfur poisoning recovery control should be performed. If the estimated SOx amount ΣS is the predetermined value SOX0 or less, sulfur poisoning recovery still does not have to be performed, so the routine is ended without performing the following processing.

On the other hand, when, at step 201, the estimated SOx amount ΣS exceeds the predetermined value SOX0, the routine proceeds to step 202. Next, at step 202, a flag F is set to "1" and a counter CNT is set to "0", then the routine proceeds to step 203. These flag F and counter CNT are used in later processing. Next, at step 203, based on a map such as shown in FIG. 6, an execution time tR and stop time tL of rich processing are calculated, then the routine proceeds to step 204. Next, at step 204, rich processing is executed for the execution time tR which was calculated at step 203, then the routine proceeds to step 205 without stopping the rich processing.

Next, at step 205, rich time extension control is executed for judging whether to further continue and extend the rich processing or stop it.

Therefore, while referring to FIG. 12, rich time extension control operation will be explained. FIG. 12 is a flow chart of a rich time extension control operation according to an embodiment of the present invention. This operation is performed as a routine which is called up at step 205 of the sulfur poisoning recovery control operation.

First, at step 300, a lower limit value of the SOx release speed Vt, that is, a lower limit release speed Vmin, is set, then the routine proceeds to step 301.

The lower limit release speed Vmin is set from the viewpoints of prevention of degradation of the NOx storage reduction catalyst 24 and prevention of deterioration of the fuel efficiency. That is, when the SOx release speed Vt is lower than the lower limit release speed Vmin, it takes time for releasing the SOx which is stored in the NOx storage reduction catalyst 24 and the execution time of the sulfur poisoning recovery control becomes extended. This being so, the NOx storage reduction catalyst 24 is exposed to a high temperature of the SOx release temperature or more for a long time and is therefore degraded. Further, the problems of deterioration of the fuel efficiency along with the temperature elevation control etc. become more pronounced. Therefore, a lower limit release speed Vmin in accordance with the exhaust gas amount SV is set within a range where these are allowed.

Next, at step 301, the SOx release speed Vt is calculated as explained above by the Arrhenius equation or other experimentally found function or map, then the routine proceeds to step 302. Next, at step 302, it is judged if the SOx release speed Vt which is calculated at at step 301 is larger than the lower limit release speed Vmin which is set at step 202. If the SOx release speed Vt is the lower limit release speed Vmin or less, as explained below, there are the problems of degradation of the NOx storage reduction catalyst 24, deterioration of the fuel efficiency, etc., so the routine proceeds to step 303 where the flag F is set to "0", the routine proceeds to step 307, then the rich processing is stopped and the routine is ended.

On the other hand, when, at step 302, the SOx release speed Vt is larger than the lower limit release speed Vmin, the routine proceeds to step 304. Next, at step 304, the rich processing is continued, then the routine proceeds to step 305. Next, at step 305, the re-storage rate R is calculated, then the routine proceeds to step 306. In the present embodiment, the re-storage rate R is calculated from the area ratio of the SOx amount distribution at the current point of time which is obtained by the SOx amount distribution update operation shown in FIG. 10 and the SOx amount distribution which is predicted after this moves by exactly the SOx movement distance which was calculated at step 104.

Next, at step 306, it is judged if the re-storage rate R is smaller than a predetermined lower limit re-storage rate Rmin. The lower limit re-storage rate Rmin is set from the viewpoint of suppressing excessive release of SOx. That is, a small re-storage rate R means that the SOx which is stored in the NOx storage reduction catalyst 24 is discharged into the atmosphere without being re-stored. If a large amount of SOx is discharged all at once, people will detect this as a bad odor, so this is not preferable. Therefore, the lower limit re-storage rate Rmin is determined so that the release of SOx is within an allowable range.

Specifically, if defining the amount of SOx which is actually discharged per unit time from the NOx storage reduction catalyst 24 without being re-stored as the "SOx discharge speed Vx", the SOx discharge speed Vx can be expressed using the SOx release speed Vt and re-storage rate R as Vx=Vt×(1-R). That is, the SOx release speed Vt is the release speed when the re-storage rate R=0, while the SOx discharge speed Vx can be said to be the release speed of Vt×(1-R). Therefore, if defining the limit value of the SOx discharge speed Vx where the discharge of SOx becomes within an allowable range from the viewpoint of a bad odor as the limit SOx discharge speed Vmax, the lower limit re-storage rate Rmin can be expressed as Rmin=1-Vmax/Vt.

Furthermore, the limit SOx discharge speed Vmax is set based on the amount of SOx which is released in accordance with the exhaust gas amount SV and the amount of H₂S converted from SOx predicted in advance. That is, due to the reaction of the CO in the exhaust gas and H₂O, CO₂ and H₂ are produced. Due to the reaction of this H₂ and SO₂, H₂O and H₂S are produced. SOx and H₂S are causes of bad odor, so the limit SOx discharge speed Vmax is set in accordance with the exhaust gas amount SV so that the amount of SOx and amount of H₂S which are discharged into the atmosphere become predetermined values or less. That is, when the exhaust gas amount SV is large and it is expected that the amount of SOx and amount of H₂S which are discharged into the atmosphere will become larger, the limit SOx discharge speed Vmax is set lower.

Using the thus found lower limit re-storage rate Rmin, when, at step 306, the re-storage rate R is the lower limit re-storage rate Rmin or more, the problem of bad odor etc. will still not occur even if continuing the rich processing, so the routine proceeds to step 301 where the above processing is repeated. On the other hand, when, at step 306, the re-storage rate R is smaller than the lower limit re-storage rate Rmin, it is predicted that the amount of SOx and amount of H₂S which are discharged into the atmosphere will be large, so the routine proceeds to step 307 where the rich processing is stopped, then the routine is ended.

Due to the above, according to the rich time extension control operation of step 205 of FIG. 11, the rich processing which was performed at step 204 of FIG. 11 for exactly the execution time tR is further continued and extended as shown by ΔtR of FIG. 5B or is stopped without extension.

After this, the processing is returned to the sulfur poisoning recovery control operation of FIG. 11, then the routine proceeds to step 206. Next, at step 206, the rich processing is made to stop for exactly the time tL which is calculated at step 203, next, the routine proceeds to step 207.

Next, at step 207, the counter CNT is incremented, then the routine proceeds to step 208. Next, at step 208, it is judged if the counter CNT is larger than a predetermined value CNT0. The predetermined value CNT0 is determined based on the number of times or execution time of rich processing required for sulfur poisoning recovery of the NOx storage reduction catalyst 24. If the counter CNT is larger than the predetermined value CNT0, the routine proceeds to step 209. Next, at step 209, the flag F is set to "0", then the routine proceeds to step 210. On the other hand, if the counter CNT is the predetermined value CNT0 or less, the routine proceeds to step 210.

Next, at step 210, it is judged if the flag F is "0". If the flag F is not "0", that is, if the flag F is not set to "0" at step 209 or at step 303 of the rich time extension control operation shown in FIG. 12, it is necessary to continue the sulfur poisoning recovery control, so the routine proceeds to step 203 where the above processing is repeated.

On the other hand, when, at step 210, the flag F is "0", that is, when the flag F is set to "0" at step 209 or at step 303 of the rich time extension control operation shown in FIG. 12, the routine is ended. When, at step 209, the flag F is set to "0", it means that the sulfur poisoning recovery of the NOx storage reduction catalyst 24 has been completed. On the other hand, when the flag F is set to "0" at step 303 of the rich time extension control operation shown in FIG. 12, as explained above, there are the problems of degradation of the NOx storage reduction catalyst 24, deterioration of the fuel efficiency, etc., so the routine is forcibly ended even when the sulfur poisoning recovery has not been completed.

Due to the above, according to the present invention, by stopping the sulfur poisoning recovery control itself or by extending the execution time of each rich processing, that is, the effective rich processing time, as much as possible in accordance with the operating conditions from the viewpoint of heat degradation of the NOx storage reduction catalyst or deterioration of the fuel efficiency, it becomes possible to perform sulfur poisoning recovery control with a good energy efficiency.

Note that, the present invention was explained based on specific embodiments, but a person skilled in the art could make various changes, corrections, etc. without departing from the scope of the invention as defined by the appended claims.

### Explanation of References

- 4: intake manifold
- 5: exhaust manifold
- 7: exhaust turbocharger
- 22: oxygen storage catalyst
- 24: NOx storage reduction catalyst

## Claims

1. An exhaust purification system (20) of an internal combustion engine which arranges in an engine exhaust passage (23, 25) an NOx storage reduction catalyst (24) which stores NOx which is contained in exhaust gas when an air-fuel ratio of inflowing exhaust gas is lean and which reduces and purifies the stored NOx when the air-fuel ratio of the inflowing exhaust gas becomes the stoichiometric air-fuel ratio or rich and which is provided with sulfur poisoning recovery control means for performing sulfur poisoning recovery control which makes a catalyst temperature of the NOx storage reduction catalyst (24) rise to an SOx release temperature and makes the air-fuel ratio of the exhaust gas rich when said NOx storage reduction catalyst (24) should be made to release the stored SOx, said exhaust purification system (20) of an internal combustion engine **characterized by** being further provided with SOx release speed calculating means for calculating a speed of release of SOx which is stored in the NOx storage reduction catalyst (24), said sulfur poisoning recovery control means being provided with a rich time extension control which is executed for judging whether to further continue and extend the rich processing or to stop it, by stopping sulfur poisoning recovery control when said sulfur poisoning recovery control means should execute sulfur poisoning recovery control and the SOx release speed which is calculated by said SOx release speed calculating means is smaller than a lower limit release speed, and by being further provided with re-storage rate calculating means for calculating a ratio of an amount of SOx which is re-stored in said NOx storage reduction catalyst (24) in an amount of SOx which is released from said NOx storage reduction catalyst (24), defined as a re-storage rate, and in that said sulfur poisoning recovery control means repeatedly executes rich processing which makes the air-fuel ratio of the inflowing exhaust gas rich interspaced by exactly a lean time and uses the re-storage rate which is calculated by said re-storage rate calculating means during each said rich processing as the basis to set a stop timing of said rich processing.

2. An exhaust purification system (20) of an internal combustion engine as set forth in claim 1, **characterized in that** said SOx release speed calculating means uses at least one of the catalyst temperature of the NOx storage reduction catalyst (24), an SOx amount stored in the NOx storage reduction catalyst (24), and a reducing agent amount supplied as the basis to calculate the SOx release speed.

3. An exhaust purification system (20) of an internal combustion engine as set forth in claim 1, **characterized in that** said sulfur poisoning recovery control means continues said rich processing when said re-storage rate which is calculated by said re-storage rate calculating means is larger than a predetermined re-storage rate and stops rich processing when said re-storage rate is smaller than said predetermined re-storage rate.

4. An exhaust purification system (20) of an internal combustion engine as set forth in claim 1, **characterized in that** said re-storage rate calculating means uses the catalyst temperature of the NOx storage reduction catalyst (24) as the basis to calculate the re-storage rate.

5. An exhaust purification system (20) of an internal combustion engine as set forth in claim 1, **characterized by** arranging in the exhaust passage upstream of said NOx storage reduction catalyst (24) an oxygen storage catalyst which stores oxygen which is contained in the exhaust gas when the air-fuel ratio of the inflowing exhaust gas is lean and which releases the stored oxygen when the air-fuel ratio of the inflowing exhaust gas becomes rich and by being further provided with SOx amount distribution calculating means for calculating distribution of an amount of SOx which is stored in said NOx storage reduction catalyst (24) and in that said re-storage rate calculating means uses an exhaust gas amount, an execution time of said rich processing from when oxygen which was stored in the oxygen storage catalyst becomes zero, and an SOx amount distribution which is calculated by said SOx amount distribution calculating means as the basis to calculate the re-storage rate during each rich processing.

## Patentansprüche

1. Abgasreinigungssystem (20) einer Verbrennungskraftmaschine, bei dem ein NOx-Speicherreduktionskatalysator (24) in einem Abgasstrang (23, 25) einer Verbrennungskraftmaschine angeordnet ist, der NOx speichert, das in dem Abgas enthalten ist, wenn ein Luft-/Kraftstoffverhältnis des einströmenden Abgases mager ist, und der das gespeicherte NOx reduziert und reinigt, wenn das Luft-/Kraftstoffverhältnis des einströmenden Abgases stöchiometrisch oder fett wird und der eine Schwefelvergiftungserholungssteuerungseinrichtung aufweist, um eine Schwefelvergiftungserholungssteuerung durchzuführen, die eine Katalysatortemperatur des NOx-Speicherreduktionskatalysators (24) auf eine SOx-Ausstoßtemperatur steigen lässt und das Luft-/Kraftstoffverhältnis des Abgases fett macht, wenn der NOx-Speicherreduktionskatalysator (24) veranlasst werden sollte, das gespeicherte SOx auszustoßen, wobei das Abgasreinigungssystem (20) einer Verbrennungskraftmaschine **dadurch gekennzeichnet ist, dass** es ferner über eine SOx-Ausstoßgeschwindigkeitsberechnungseinrichtung verfügt, um eine Ausstoßgeschwindigkeit des SOx zu berechnen, das in dem NOx-Speicherreduktionskatalysator (24) gespeichert ist, wobei die Schwefelvergiftungserholungssteuereinrichtung über eine Fettzeitverlängerungssteuerung verfügt, die ausgeführt wird, um zu beurteilen, ob die fette Verarbeitung weiter fortgesetzt und verlängert oder beendet wird, indem die Schwefelvergiftungserholungssteuerung beendet wird, wenn die Schwefelvergiftungserholungssteuerungseinrichtung die Schwefelvergiftungserholungssteuerung durchführen sollte, und die SOx-Ausstoßgeschwindigkeit, die durch die SOx-Ausstoßgeschwindigkeitsberechnungseinrichtung berechnet wird, niedriger ist als eine untere Ausstoßgeschwindigkeitsgrenze, und indem es ferner über eine Wiederspeicherungsratenberechnungseinrichtung verfügt, um ein Verhältnis einer Menge an SOx, die in dem NOx-Speicherreduktionskatalysator (24) wieder gespeichert wird, in einer Menge an SOx, das aus dem NOx-Speicherreduktionskatalysator (24) ausgestoßen wird, zu berechnen, das als eine Wiederspeicherungsrate definiert ist, und dadurch, dass die Schwefelvergiftungserholungssteuerungseinrichtung wiederholt die fette Verarbeitung ausführt, die das Luft-/Kraftstoffverhältnis des einströmenden Abgases fett macht, unterbrochen von genau einer mageren Zeit, und die Wiederspeicherungsrate, die durch die Wiederspeicherungsratenberechnungseinrichtung berechnet wird, während jeder fetten Verarbeitung als die Grundlage verwendet wird, um einen Stoppzeitpunkt der fetten Verarbeitung einzustellen.

2. Abgasreinigungssystem (20) einer Verbrennungskraftmaschine nach Anspruch 1, **dadurch gekennzeichnet, dass** die SOx-Ausstoßgeschwindigkeitsberechnungseinrichtung zumindest eines von der Katalysatortemperatur des NOx-Speicherreduktionskatalysators (24), einer SOx-Menge, die in dem NOx-Speicherreduktionskatalysator (24) gespeichert ist, und einer zugeführten Reduktionsmittelmenge als die Grundlage verwendet, um die SOx-Ausstoßgeschwindigkeit zu berechnen.

3. Abgasreinigungssystem (20) einer Verbrennungskraftmaschine nach Anspruch 1, **dadurch gekennzeichnet, dass** die Schwefelvergiftungserholungssteuerungseinrichtung die fette Verarbeitung fortsetzt, wenn die Wiederspeicherungsrate, die durch die Wiederspeicherungsratenberechnungseinrichtung berechnet wird, größer ist als eine vorgegebene Wiederspeicherungsrate und die fette Verarbeitung stoppt, wenn die Wiederspeicherungsrate niedriger ist als die vorgegebene Wiederspeicherungsrate.

4. Abgasreinigungssystem (20) einer Verbrennungskraftmaschine nach Anspruch 1, **dadurch gekennzeichnet, dass** die Wiederspeicherungsratenberechnungseinrichtung die Katalysatortemperatur des NOx-Speicherreduktionskatalysators (24) als die Grundlage verwendet, um die Wiederspeicherungsrate zu berechnen.

5. Abgasreinigungssystem (20) einer Verbrennungskraftmaschine nach Anspruch 1, **dadurch gekennzeichnet, dass** in dem Abgasstrang stromaufwärts von dem NOx-Speicherreduktionskatalysator (24) ein Sauerstoffspeicherkatalysator angeordnet ist, der Sauerstoff speichert, der in dem Abgas enthalten ist, wenn das Luft/Kraftstoffverhältnis des einströmenden Abgases mager ist, und der den gespeicherten Sauerstoff ausstößt, wenn das Luft-/Kraftstoffverhältnis des einströmenden Abgases fett wird und das ferner **dadurch gekennzeichnet ist, dass** es über eine SOx-Mengenverteilungsberechnungseinrichtung verfügt, um die Verteilung einer SOx-Menge zu berechnen, die in dem NOx-Speicherreduktionskatalysator (24) gespeichert ist und dadurch, dass die Wiederspeicherungsratenberechnungseinrichtung eine Abgasmenge, eine Ausführungszeit der fetten Verarbeitung, ab der der Sauerstoff, der in dem Sauerstoffspeicherkatalysator gespeichert war, Null erreicht, und eine SOx-Mengenverteilung, die von der SOx-Mengenverteilungsberechnungseinrichtung berechnet wird, als die Grundlage verwendet, um die Wiederspeicherungsrate während jeder fetten Verarbeitung zu berechnen.

## Revendications

1. Système de purification d'échappement (20) d'un moteur à combustion interne qui agence dans un passage d'échappement de moteur (23, 25) un catalyseur de réduction de stockage de NOx (24) qui stocke du NOx qui est contenu dans le gaz d'échappement quand un rapport air-carburant du gaz d'échappement entrant est pauvre et qui réduit et purifie le NOx stocké quand le rapport air-combustible du gaz d'échappement entrant devient le rapport air-combustible stoechiométrique ou riche et qui est pourvu de moyens de commande de régénération d'empoisonnement au souffre pour réaliser la commande de régénération d'empoisonnement au souffre qui fait qu'une température de catalyseur du catalyseur de réduction de stockage de NOx (24) monte à une température de libération de SOx et rend le rapport air-combustible du gaz d'échappement riche quand ledit catalyseur de réduction de stockage de NOx (24) doit libérer le SOx stocké, ledit système de purification d'échappement (20) d'un moteur à combustion interne étant **caractérisé en ce qu'**il est en outre pourvu de moyens de calcul de vitesse de libération de SOx pour calculer une vitesse de libération du SOx qui est stocké dans le catalyseur de réduction de stockage de NOx (24), lesdits moyens de commande de régénération d'empoisonnement au souffre étant pourvus d'une commande d'extension de temps riche qui est exécutée pour juger s'il faut encore continuer et étendre le traitement riche ou le stopper, en stoppant la commande de régénération d'empoisonnement au souffre quand lesdits moyens de commande de régénération d'empoisonnement au souffre doivent exécuter la commande de régénération d'empoisonnement au souffre et la vitesse de libération de SOx qui est calculée par lesdits moyens de calcul de vitesse de libération de SOx est plus petite qu'une vitesse de libération limite inférieure, et étant en outre pourvus de moyens de calcul de taux de restockage pour calculer un taux d'une quantité de SOx qui est restocké dans ledit catalyseur de réduction de stockage de NOx (24) dans une quantité de SOx qui est libérée dudit catalyseur de réduction de stockage de NOx (24), défini comme un taux de restockage, et **en ce que** lesdits moyens de commande de régénération d'empoisonnement au souffre exécutent de manière répétée le traitement riche qui rend le rapport air-combustible du gaz d'échappement entrant riche intercalé d'exactement un moment pauvre et utilise le taux de restockage qui est calculé par lesdits moyens de calcul de taux de restockage pendant chaque dit traitement riche comme la base pour régler un moment d'arrêt dudit traitement riche.

2. Système de purification d'échappement (20) d'un moteur à combustion interne selon la revendication 1, **caractérisé en ce que** lesdits moyens de calcul de vitesse de libération de SOx utilisent au moins l'une de la température de catalyseur du catalyseur de réduction de stockage de NOx (24), de la quantité stockée de SOx dans le catalyseur de réduction de stockage de NOx (24), et d'une quantité d'agent réducteur fournie comme la base pour calculer la vitesse de libération de SOx.

3. Système de purification d'échappement (20) d'un moteur à combustion interne selon la revendication 1, **caractérisé en ce que** lesdits moyens de commande de régénération d'empoisonnement au souffre continuent ledit traitement riche quand ledit taux de restockage qui est calculé par lesdits moyens de calcul de taux de restockage est plus grand qu'un taux de restockage prédéterminé et stoppe le traitement riche quand ledit taux de restockage est inférieur au dit taux de restockage prédéterminé.

4. Système de purification d'échappement (20) d'un moteur à combustion interne selon la revendication 1, **caractérisé en ce que** lesdits moyens de calcul de taux de restockage utilisent la température de catalyseur du catalyseur de réduction de stockage de NOx (24) comme base pour calculer le taux de restockage.

5. Système de purification d'échappement (20) d'un moteur à combustion interne selon la revendication 1, **caractérisé par** le fait d'agencer dans le passage d'échappement en amont dudit catalyseur de réduction de stockage de NOx (24) un catalyseur de stockage d'oxygène qui stocke de l'oxygène qui est contenu dans le gaz d'échappement quand le rapport air-combustible du gaz d'échappement est pauvre et qui libère l'oxygène stocké quand le rapport air-combustible du gaz d'échappement entrant devient riche et étant en outre pourvu de moyens de calcul de distribution de quantité de SOx pour calculer la distribution d'une quantité de SOx qui est stocké dans ledit catalyseur de réduction de stockage de NOx (24) et en ce que lesdits moyens de calcul de taux de restockage utilisent une quantité de gaz d'échappement, un temps d'exécution dudit traitement riche depuis quand l'oxygène qui a été stocké dans le catalyseur de stockage d'oxygène devient nul, et une distribution de quantité de SOx qui est calculée par lesdits moyens de calcul de distribution de quantité de SOx comme la base pour calculer le taux de restockage pendant chaque traitement riche.
